# EUROPÄISCHE PATENTANMELDUNG

(11) **EP 4 704 372 A1**
(43) Veröffentlichungstag der Anmeldung: **04.03.2026**
(21) Anmeldenummer: 24197673.7
(22) Anmeldetag: 30.08.2024
(51) Int. Cl.: H04L 9/32, H04L 9/00

(54) **CLIENT-ZERTIFIKAT ZUR ZERTIFIZIERUNG EINES ÖFFENTLICHEN SCHLÜSSELS UND GERÄT**

(71) Anmelder: Siemens Aktiengesellschaft, 80333 München (DE)
(72) Erfinder: Fries, Steffen, 85598 Baldham (DE); Güttinger, Andreas, 90765 Fürth (DE)
(74) Vertreter: Siemens Patent Attorneys

(57) **Zusammenfassung**

Client-Zertifikat zur Zertifizierung eines öffentlichen Schlüssels und Gerät.

Client-Zertifikat zur Zertifizierung eines öffentlichen Schlüssels, welches eine Zertifikatskomponente enthält, die einen vorgesehene Zertifikatserneuerung terminiert.

Das Gerät weist ein solches Client-Zertifikat auf.

## Beschreibung

Die Erfindung betrifft ein Client-Zertifikat zur Zertifizierung eines öffentlichen Schlüssels sowie ein Gerät.

Digitale Zertifikate werden verwendet, um den öffentlichen Schlüssel eines Nutzers (menschlicher Nutzer, Gerät, Service-Nutzer) diesem zuzuordnen. Zertifikate werden von Zertifizierungsstellen ausgestellt und besitzen eine bestimmte Gültigkeit, die durch die ausgebende Stelle festgelegt wird. Typischerweise muss die Aktualisierung eines Zertifikates vor dem Ablauf des gerade gültigen Zertifikates durchgeführt werden, um eine durchgängige Nutzung von Zertifikaten im operativen Betrieb zu gewährleisten. Die Erneuerung von Zertifikaten ist eine Managementaufgabe und muss durch entsprechende Prozesse unterstützt werden.

Es wird eine vereinfachte Möglichkeit benötigt, mit der Client die Beantragung einer Zertifikatsaktualisierung im Rahmen der operativen Nutzung anstößt. Idealerweise soll dieser Zeitraum von der ausgebenden Stelle beeinflussbar sein, um den Aufwand der Ausstellung besser ausgleichen zu können.

Bekannt sind Komponenten eines X.509-Zertifikates, die die Gültigkeit des Zertifikates beschreiben, hier in der Angabe von... bis.

Es ist bekannt, dass Zertifikate nach einem Ablauf ihre Gültigkeit verlieren. Es sind zudem Gerätedokumentationen bekannt, gemäß welchen ein Gerätezertifikat innerhalb vorbestimmter Zeiträume zu erneuern sind.

Allerdings können Zertifikatserneuerungen noch immer versehentlich unterbleiben.

Es ist daher Aufgabe der Erfindung, ein verbessertes Client-Zertifikat bereitzustellen, bei welchem eine Zertifikatserneuerung leicht angestoßen werden kann. Ferner ist es Aufgabe der Erfindung, ein verbessertes Gerät anzugeben, bei welchem oder mit welchem die Zertifikatserneuerung leichter möglich ist.

Diese Aufgabe der Erfindung wird mit einem Client-Zertifikat mit den in Anspruch 1 angegebenen Merkmalen sowie mit einem Gerät mit den in Anspruch 7 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Client-Zertifikat ist ein Client-Zertifikat zur Zertifizierung eines öffentlichen Schlüssels. Das erfindungsgemäße Client-Zertifikat enthält eine Zertifikatskomponente, vorzugsweise eine Zertifikatskomponente in Form einer Zertifikatserweiterung, die eine geplante Zertifikatserneuerung terminiert.

Ein solches erfindungsgemäßes Client-Zertifikat erleichtert ein proaktives Management von Zertifikatserneuerungen und reduziert das Risiko unerwarteter Zertifikatsabläufe und daraus resultierender Systemanfälligkeiten oder Sicherheitslücken. Mittels der erfindungsgemäß vorgesehenen Integration der Erneuerungsinformationen direkt in das Zertifikat eliminiert die Erfindung die Notwendigkeit separater Konfigurationsprozesse und minimiert dadurch das Potenzial für Fehlkonfigurationen. Infolge der Terminierung einer Zertifikatserneuerung direkt im Client-Zertifikat selbst sind keine weiteren Administrationstools vorzusehen. Vielmehr reicht eine Zertifikatsprüfung erfindungsgemäß völlig aus, um eine Zertifikatserneuerung sicher vorzusehen.

In einer vorteilhaften Weiterbildung des erfindungsgemäßen Client-Zertifikats ist die Zertifikatserneuerung für einen Zeitpunkt terminiert, der nicht dem Ablaufdatum des Client-Zertifikats entspricht. Besonders vorteilhaft ist bei dem erfindungsgemäßen Client-Zertifikat die Zertifikatserneuerung für einen Zeitpunkt vor dem Ablaufdatum des Client-Zertifikats terminiert. Diese Weiterbildung der Erfindung stellt sicher, dass eine Zertifikatserneuerung rechtzeitig vor einem Ablauf des Clientzertifikats erfolgt. Dies vermeidet unbeabsichtigte Ausfallzeiten und gewährleistet vorteilhaft die Systemsicherheit.

Vorzugsweise terminiert das erfindungsgemäße Client-Zertifikat die Zertifikatserneuerung für ein bestimmtes Datum. Alternativ und ebenfalls vorteilhaft terminiert das Client-Zertifikat die Zertifikatserneuerung für einen Zeitraum. Diese Funktion bietet ein Zeitfenster für die Erneuerung und bietet Flexibilität, um unterschiedliche betriebliche Anforderungen zu berücksichtigen und gleichzeitig rechtzeitige Zertifikatsaktualisierungen sicherzustellen.

Alternativ und ebenfalls bevorzugt terminiert das erfindungsgemäße Client-Zertifikat die Zertifikatserneuerung relativ zu einer verbleibenden Gültigkeitsdauer des Client-Zertifikats.

Das erfindungsgemäße Gerät weist ein erfindungsgemäßes Client-Zertifikat, wie oben beschreiben auf.

Das erfindungsgemäße Gerät ist bevorzugt derart eingerichtet, die Terminierung der Zertifikatserneuerung aus der Zertifikatskomponente zu erfassen und die Zertifikatserneuerung abhängig von der Terminierung anzustoßen oder durchzuführen. Diese vorteilhafte Weiterbildung der Erfindung ermöglicht eine automatisierte Zertifikatserneuerung und stellt folglich eine rechtzeitige Zertifikatserneuerung sicher.

Alternativ ist das erfindungsgemäße Gerät eingerichtet, ein Client-Zertifikat eines Kommunikationspartners, wie zuvor beschrieben, zu erfassen, die Terminierung der Zertifikatserneuerung aus der Zertifikatskomponente zu erfassen und die Zertifikatserneuerung abhängig von der Terminierung anzustoßen oder durchzuführen.

Nachfolgend wird die Erfindung anhand detaillierterer Ausführungsbeispiele näher erläutert.

Im Gegensatz zu den existierenden Verfahren wird erfindungsgemäß der Zeitpunkt der Zertifikatserneuerung als Erweiterung im Zertifikat kodiert. Diese Information kann dabei in verschiedener Form bereitgestellt werden:
- Als direktes Datum
- Als Zeitraum
- Als Datum in Abhängigkeit von der Restlaufzeit des Zertifikates

Zusätzlich zu den oben genannten Ansätzen kann eine weitere Information bereitgestellt werden, mit deren Hilfe der Startzeitpunkt für die Erneuerung ab einem bestimmten Zeitpunkt zufällig gewählt wird. Dieser Ansatz kann vorteilhaft sein, wenn viele Zertifikate zum gleichen Zeitpunkt ausgestellt wurden, man aber bei der Erneuerung eine große Menge gleichzeitiger Anfragen vermeiden möchte. Dazu wird im Folgenden eine neue Erweiterung *renewalHint* definiert.

Nach X.509 (siehe RFC5280) ist beispielsweise ein Identitätszertifikat in ASN.1 wie folgt definiert:

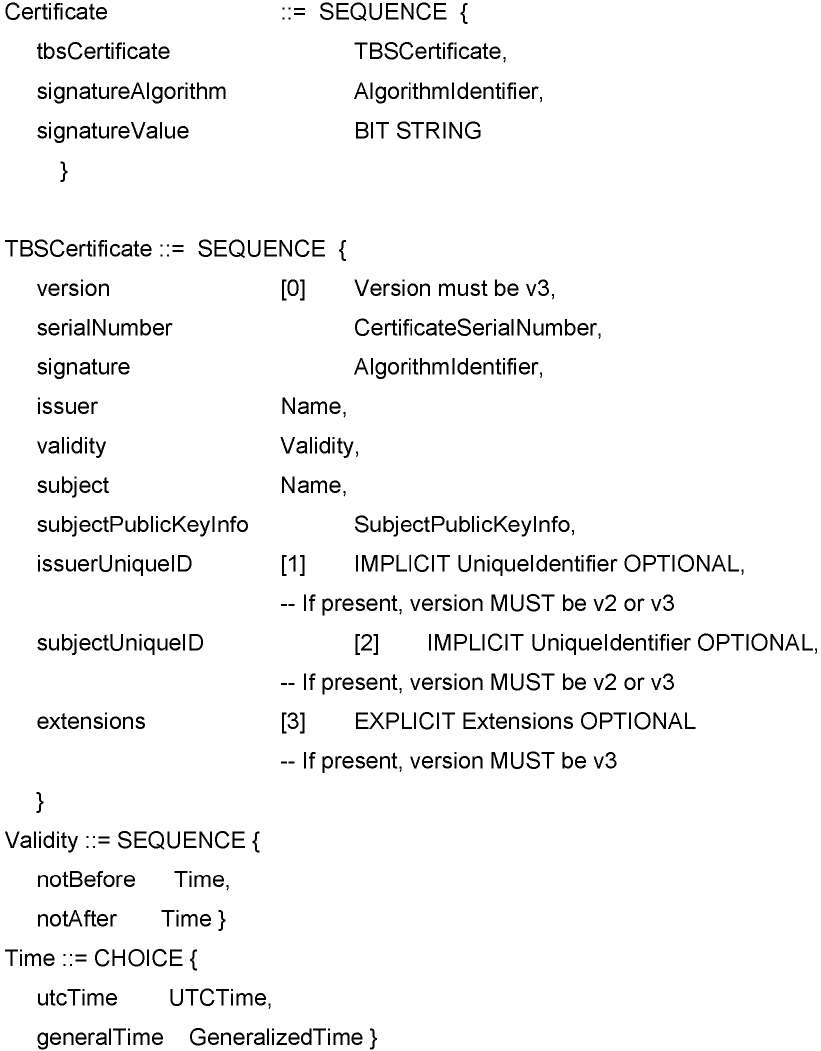

Nach X.509 ist ein Attributzertifikat in ASN.1 wie folgt definiert (siehe auch ISO 9594-8/ITU-T Recommendation X.509):

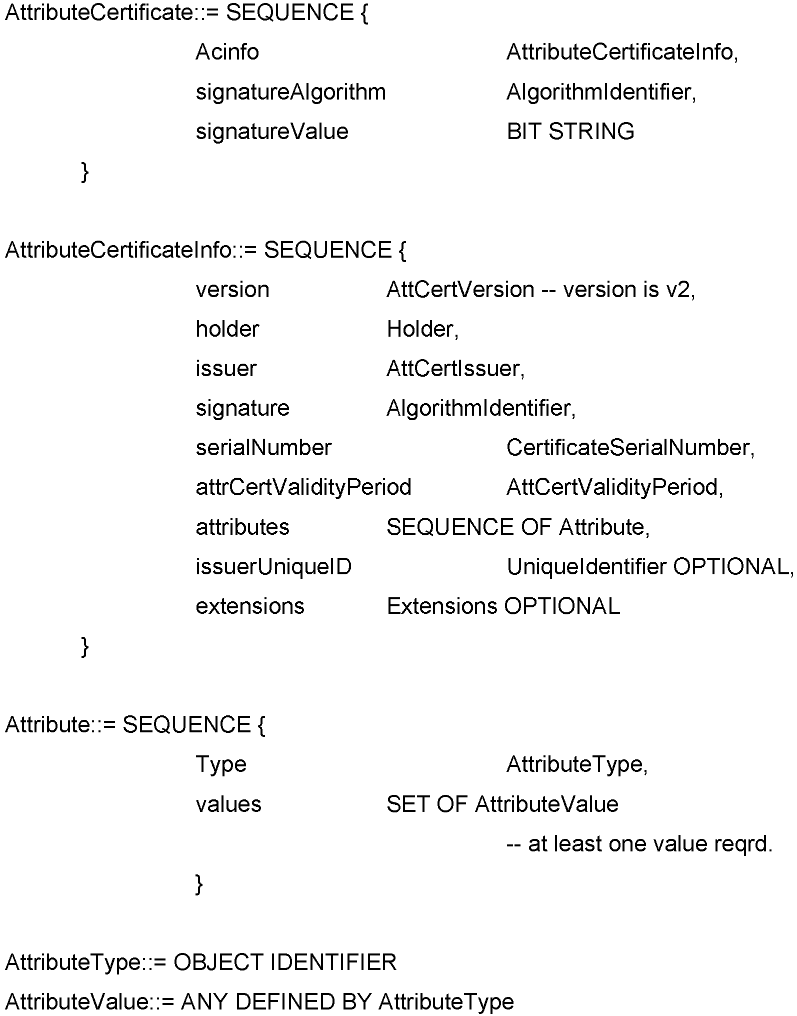

Eine eigene Erweiterung für die Bestimmung des Zeitpunktes einer Zertifikatserneuerung kann wie folgt definiert werden

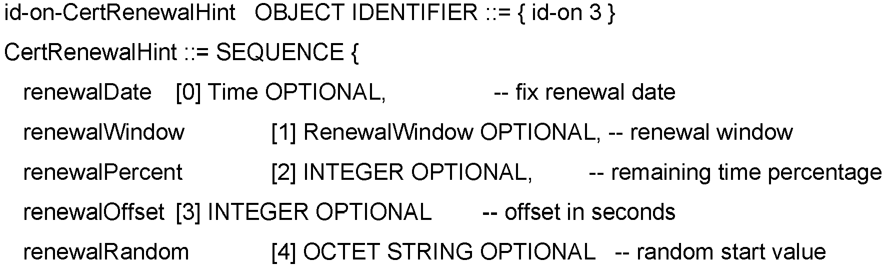

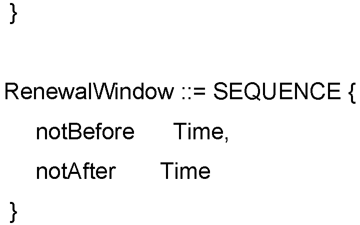

Die Komponenten der Extension beschreiben dabei mit optionalen Parametern, nach welcher Zeit oder in welchem Zeitraum eine Aktualisierung des Zertifikates zu erfolgen hat.

Die Komponente
- renewalDate gibt dabei ein konkretes Datum für eine Aktualisierung an.
- renewalWindow gibt dabei einen Zeitraum (typischerweise Tage oder Wochen) für eine Aktualisierung an.
- renewal Percent gibt dabei einen prozentualen Bereich der Restlaufzeit (typischerweise Tage oder Wochen) für eine Aktualisierung an.

Die Komponente renewalRandom kann dabei gemeinsam mit einer der Komponenten renewalDate, renewalWindow oder renewalPercent genutzt werden. Der Wert kann dazu genutzt werden einen lokalen Zufallszahlengenerator zu initialisieren, mit dem ein Offset für die Aktualisierung lokal (durch den Endpunkt) bestimmt werden kann. Die Komponente renewalOffset kann dafür genutzt werden den Offset für die Aktualisierung durch den Aussteller direkt vorzugeben. Dies ermoeglicht eine geplante Lastverteilung auf der ausstellenden Seite. Beide Werte renewalRandom und renewalOffset sind dabei pro ausgestelltem Zertifikat unterschiedlich.

Das Zertifikat wird typischerweise durch eine Komponente geprüft, insbesondere die Gültigkeit und der Revocation State. Im Zuge einer solchen Überprüfung kann ebenfalls die entsprechende Extension mit ausgewertet werden. Die Komponente kann daraufhin für das eigene Zertifikat eine entsprechende Aktualisierung anstoßen. In einer Variante kann eine Komponente, die von einem Kommunikationspartner ein Zertifikat erhält prüfen, ob dieses Zertifikat schon hätte erneuert werden sollen. Im Falle der Detektion eines Zertifikates, das erneuert werden muss, kann dann ein entsprechendes Security Event generiert werden. Dies ermöglicht z.B. einem SIEM-System eine fehlende Aktualisierung zu erkennen und entsprechend als Vorfall zu melden.

Die einzige Zeichnungsfigur 1 zeigt einen Ablauf des Anstoßens einer Zertifikatserneuerung durch ein erfindungsgemäßes Gerät mit einem erfindungsgemäßen Client-Zertifikat in einer Prinzipskizze.

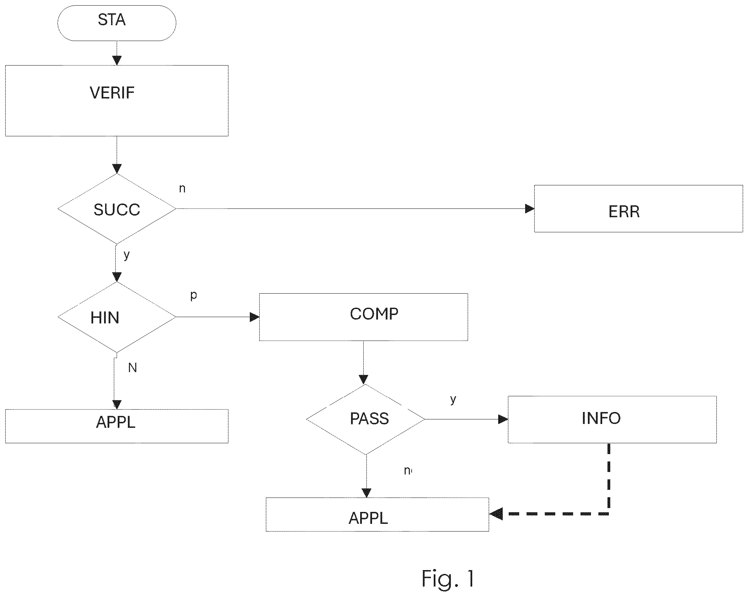

Wie in Fig. 1 dargestellt beginnt STA der Ablauf mit einer Verifizierung VERIF des Client-Zertifikats des Geräts durch das Gerät selbst.

Wenn die Verifizierung keinen n Erfolg SUCC hat, so wird eine Fehlermeldung ERR ausgegeben.

Wenn die Verifizierung allerdings y Erfolg SUCC hat, so wird das Client-Zertifikat auf eine Zertifikatskomponente, etwa eine Zertifikatserweiterung, des Client-Zertifikats mit einer Terminierung einer Zertifikatserneuerung geprüft.

Wenn es eine solche Zertifikatserweiterung im Client-Zertifikat nicht gibt N, so wird das Client-Zertifikat vom Gerät eingesetzt APPL, beispielsweise in einer Anwendung, welche auf dem Gerät installiert ist.

Wenn eine solche Zertifikatserweiterung jedoch vorhanden ist p, sowie wird die Terminierung der Zertifikatserneuerung mit der aktuellen Zeit einem Vergleich COMP unterzogen.

Wenn der Vergleich COMP ergibt, dass die Zertifikatserneuerung bereits in einem Zeitraum oder Zeitpunkt in der Vergangenheit PASS hätte durchgeführt werden müssen y, so wird eine Information INFO über die Überfälligkeit der Zertifikatserneuerung ausgegeben.

Zusätzlich wird anhand der Information INFO über die Überfälligkeit der Zertifikatserneuerung auch die Zertifikatserneuerung angestoßen. Dazu erneuert das Gerät sein Client-Zertifikat und erhält somit auch eine neue Terminierung für die Zertifikatserneuerung.

Grundsätzlich kann dann die Zertifikatserneuerung selbstredend auch dann angestoßen werden, wenn die Zertifikatserneuerung nicht überfällig ist, sondern wenn sie fällig ist. Auch in diesem Fall wird eine Zertifikatserneuerung angestoßen.

Wenn der Vergleich COMP allerdings ergibt, dass die Zertifikatserneuerung noch nicht in einem Zeitraum oder Zeitpunkt in der Vergangenheit PASS hätte durchgeführt werden müssen n, so wird das Client-Zertifikat vom Gerät eingesetzt APPL.

Optional und hier mittels des gestrichelten Pfeils angedeutet kann grundsätzlich in unkritischen Fällen auch nach einer Information INFO über eine Überfälligkeit der Zertifikatserneuerung das Client-Zertifikat eingesetzt APPL werden.

## Patentansprüche

1. Client-Zertifikat zur Zertifizierung eines öffentlichen Schlüssels, welches eine Zertifikatskomponente enthält, die einen vorgesehene Zertifikatserneuerung terminiert.

2. Client-Zertifikat nach dem vorhergehenden Anspruch, bei welchem die Zertifikatserneuerung nicht auf ein Ablaufdatum des Client-Zertifikats terminiert ist.

3. Client-Zertifikat nach dem vorhergehenden Anspruch, bei welchem die Zertifikatserneuerung vor dem Ablaufdatum des Client-Zertifikats terminiert ist.

4. Client-Zertifikat nach einem der vorhergehenden Ansprüche, bei welchem die Zertifikatserneuerung auf ein Datum terminiert ist.

5. Client-Zertifikat nach einem der vorhergehenden Ansprüche, bei welchem die Zertifikatserneuerung auf einen Zeitraum terminiert ist.

6. Client-Zertifikat nach einem der vorhergehenden Ansprüche, bei welchem die Zertifikatserneuerung relativ zu einer Restlaufzeit des Client-Zertifikats terminiert ist.

7. Gerät mit einem Client-Zertifikat nach einem der vorhergehenden Ansprüche.

8. Gerät nach dem vorhergehenden Anspruch, welches zur Erfassung einer Terminierung der Zertifikatserneuerung aus der Zertifikatskomponente ausgebildet ist und welches ausgebildet ist, abhängig von der Terminierung die Zertifikatserneuerung anzustoßen oder durchzuführen.

9. Gerät, welches zur Erfassung eines Client-Zertifikats nach einem der Ansprüche 1 bis 6 eines Kommunikationspartners ausgebildet ist und welches zur Erfassung einer Terminierung der Zertifikatserneuerung aus der Zertifikatskomponente ausgebildet ist und welches ausgebildet ist, abhängig von der Terminierung die Zertifikatserneuerung anzustoßen oder durchzuführen.

10. Gerät nach dem vorhergehenden Anspruch und nach einem der Ansprüche 7 und 8.
